# EUROPEAN PATENT SPECIFICATION

(11) **EP 2 576 451 B1**
(45) Date of publication and mention of the grant of the patent: **13.08.2014**
(21) Application number: 10736827.6
(22) Date of filing: 28.05.2010
(51) Int. Cl.: C02F 1/76, C01B 11/02

(54) **APPARATUS FOR DISINFECTING WATER**
VORRICHTUNG ZUR DESINFEKTION VON WASSER
APPAREIL DE DÉSINFECTION DE L'EAU

(43) Date of publication of application: 10.04.2013
(73) Proprietor: Grundfos Holding A/S, 8850 Bjerringbro (DK)
(72) Inventor: BASO, Francesco, I-30175 Marghera (VE) (IT)
(74) Representative: Tiburzi, Andrea
(86) International application number: PCT/IT2010/000234
(87) International publication number: WO 2011/148395

(56) References cited:
- DE-A1-102008 042 424
- JP-A- 2008 094 662
- US-A1- 2005 244 328

## Description

The present invention relates to an apparatus for disinfecting water.

More specifically, the invention concerns an apparatus of the above kind, ensuring a better safety with respect to explosion risks and with respect to user accidents, with the same efficiency obtained using the known solutions.

Water disinfection is necessary in order to prevent microbiological proliferation, such as pathogen and environmental bacteria, fungi or algae, that can, in case it is provided on civil systems, generate hygienic-sanitary problems, or, in case of application on industrial systems, reducing their efficiency.

One of the most diffused methods for carrying out said disinfection provides mixing chlorine dioxide and dilution water, and then mixing the above water to the water to be subjected to treatment. Chlorine dioxide is a very instable compound slowly tending to dissociate into chlorine and oxygen, developing such an amount of energy to develop an explosion. In presence of heat or of electrostatic charges, this tendency increases, so that usually depuration systems provides *in situ* generation, thus preventing explosion risk that could occur during transportation or during its stocking within a store.

A known solution is the one described in the Italian Patent Application n° MI2007A002388, concerning an apparatus for disinfecting water comprising at least a first reactor supplied with chemical reagents and suitable to generate disinfecting and oxidation products, characterised in that it comprises at least a second reactor, supplied by water, and suitable to introduce within waters to be disinfected, disinfecting and oxidation products mixed with supply water, said first and second reactors being immerged within water to be disinfected, and in that second reactor comprises an ejector from which supply water and disinfection and oxidant products mixture outflows.

Another example of a typical prior art apparatus is given by the document (JP2008094662).

Ejector described in this solution is supplied by water and chlorine dioxide mixture at a pressure higher that the pressure within the tube with water to be subjected to treatment, thus involving a dilution of chlorine dioxide at the suitable concentration to carry out disinfection.

Said solution has the serious drawback of the high risk of explosion in case ejector gets clogged, and thus it has never been realised and put on the market.

Reactor submerged within water further implies another drawback of not providing the possibility of easily and reliably carrying out sampling for analysis.

Among reactions used to obtain chlorine dioxide, one of the most diffused is the one transforming two reacting compounds, sodium chlorite and hydrochloric acid, within sodium chlorine, water and chlorine dioxide. Dosing ratio of the two reacting components, acid and chlorite, necessary to obtain a result of chemical reaction satisfying requirements of water disinfection apparatus described in the above, is of about 1/3 moles. Such a high dosing ratio involves problems of storing dangerous material, such as hydrochloric acid, being this compound highly corrosive.

Object of the present invention is that of overcoming the above mentioned drawbacks, realising an apparatus for disinfection of water ensuring a higher safety with respect to explosion risks and with respect to damages to users, with the same efficiency obtained employing known art.

Further object of the present invention is that of realising a water disinfection apparatus requiring, in order producing chlorine dioxide, a dosing ratio of the two reacting compounds lower than those required by known apparatuses, reducing needing of storing hydrochloric acid and the consequent risks described in the above.

Another object of the present invention is that of realising a water disinfection apparatus which is safe and reliable, and permits being easily realised at competitive prices.

It is therefore specific object of the present invention an apparatus for disinfecting water, comprising at least a reactor, having at least an outlet opening and supplied by chemical compounds suitable to generating disinfecting and/or oxidizing products, and a duct supplied with a liquid for diluting said disinfecting and/or oxidizing products and suitable to introduce the obtained mixture within water to be disinfected, characterised in that said first reactor is contained within said conduct and in that it further comprises a first fluid extractor, provided close to said reactor outlet opening.

Furthermore, according to the invention, apparatus comprises a fluid mixer, at one outlet end of said conduct.

According to the invention, said first fluid extractor comprises a first helix, suitable to be activated by flow of said dilution fluid entering within said conduct, and a second helix, which is coaxial to an integral with said first helix, suitable to create a depression on its surface faced outside said reactor.

Still according to the invention, said second helix is contained within said first helix and it is on the same plane of the first helix.

Preferably, according to the invention, said fluid mixer comprises a third helix.

Furthermore, according to the invention, said third helix is contained within a cage.

Preferably, according to the invention, said reactor has a bottom with rounded corners.

Preferably, according to the invention, said reactor comprises two supply conducts, having their outlet close to a closed bottom of said reactor.

Furthermore, according to the invention, said conducts are placed vertically, radially oriented with respect to the horizontal section of said reactor.

Still according to the invention, said conducts are placed vertically, substantially in correspondence of the vertical axis of said reactor.

Furthermore, according to the invention, said reactor has, close to said outlet opening, rounded corners.

Still according to the invention, said reactor is comprised of antistatic material.

Finally, according to the invention, fixed fins are provided within said conduct, in any position and/or with any orientation.

The present invention will be now described, for illustrative, but not limitative purposes, according to one embodiment, with particular reference to the enclosed figures, wherein it is schematically shown the operation of the apparatus according to the invention. Particularly,
figure 1 is a longitudinal section of a preferred embodiment of the apparatus according to the invention;
figure 2 is an axonometric exploded view of a preferred embodiment of first embodiment of the apparatus of figure 1;
figure 3 shows in (a) and (b) two isometric views, in (c) a front view and in (d) a lateral view of a preferred embodiment of a third component of apparatus of figure 1; and
figure 4 is a longitudinal section view of a further preferred embodiment of the apparatus according to the invention.

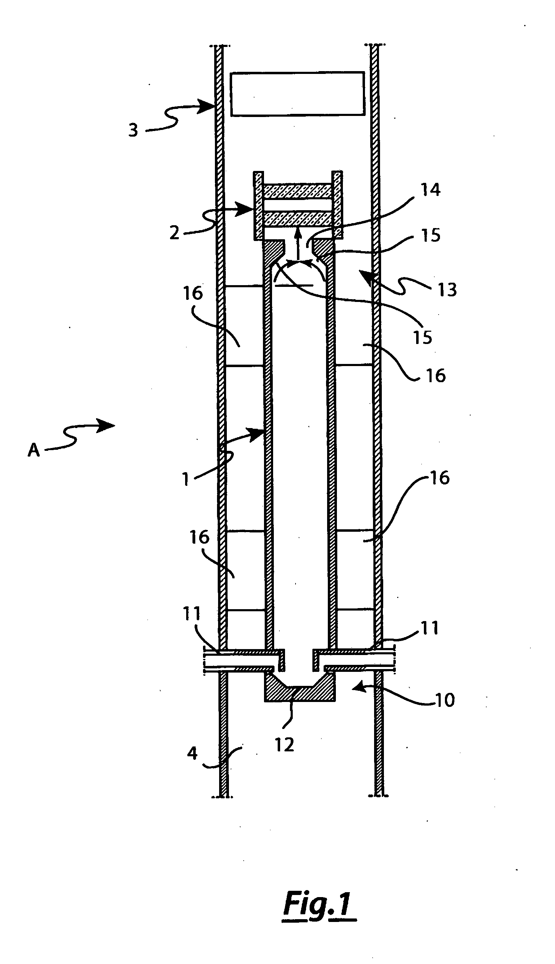

Observing first figure 1, apparatus according to the invention, indicated by general reference A, comprises a reactor1, within which reagent compounds have been introduced, and from which gas to be mixed with dilution water outflows, a homogenizer/extractor 2, making the mixture between dilution water and gas from reactor 1 homogeneous, a mixer 3, permitting input of disinfecting mixture within water to be subjected to treatment conduct, and a conduct 4, enclosing said three components 1, 2, 3, and through which dilution water flows.

Reactor 1 has a first zone 10, for entrance of reagent compounds, characterised by presence of two conducts 11 for input of reagent compounds, provided horizontally, and with a bottom 12, having a concave shape and rounded corners. Such a shape of first zone 10 involves a reactor volume lower than the known ones, providing conducts which are substantially parallel with respect to the reactor; furthermore, such a shape permits reducing risks of clogging tubes and, consequently, obtaining a higher safety level.

Reactor 1 also has a second zone 13 for exit of gas, comprising an outlet opening 14 and rounded corners 15, advantageously preventing creation of gas vortexes occurring in known reactors, in correspondence of corners close to the exit opening. Said vortexes create an accumulation thus increasing, as already said, explosion risk.

Advantageously, reactor 1 id comprised of antistatic material, particularly "ATEX" certified materials (according to European Directive 94/9/CE concerning "Atmospheres and Explosives") permitting safe installation event in electric plants, off-shore platforms, petrochemical plants. Moreover, antistatic material improves heat disposal preventing creation of possible hot-spots.

Reactor 1 finally has spacing fins 16, permitting its position at the centre of conduct 4, and advantageously break homogeneous flow of dilution water flowing within the same, thus creating depressions and consequent turbulences, which are useful to an optimum dilution of gas within water. It is well clear that operation of said spacing fins 16 is independent with respect to their position within the space and to their orientation.

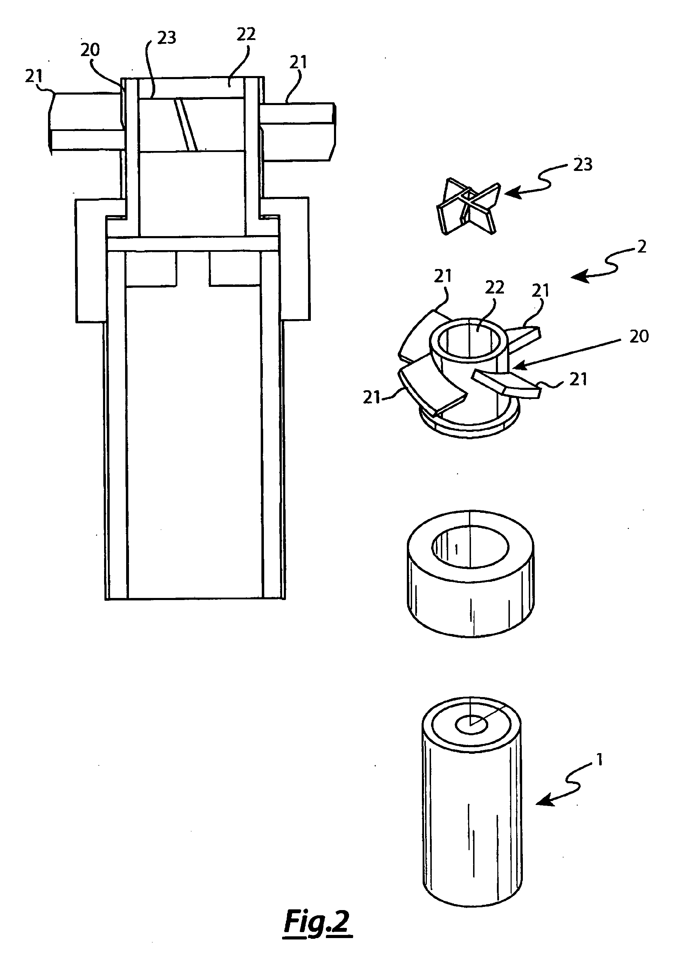

Observing now figure 2, in one preferred embodiment, homogenizer/extractor 2 provides a first helix 20, with blades submerged within conduct 4, and moved by dilution water contained therein, and having an opening 22 in correspondence of opening 14 of reactor gas outlet; a second helix 23 is contained within said opening 22 - which is coaxial with respect to first helix 20 - and moved by motion of said first helix 20, creating a depression above the same, generating a whirling movement into gas exiting the opening 14, and permitting a homogeneous mixing of dilution water.

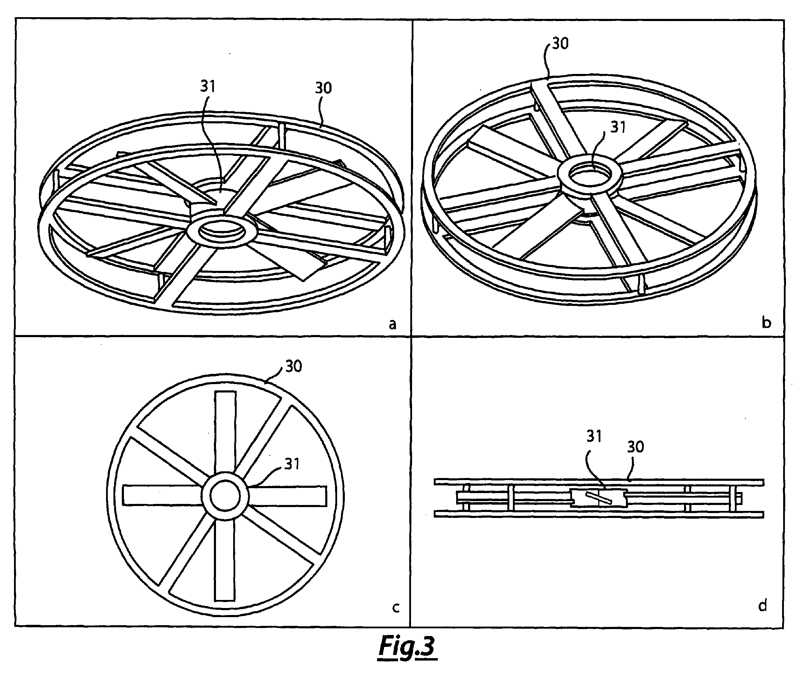

Coming now to figure 3, in a preferred embodiment, mixer 3 comprises a circular cage 30, a third helix 31, contained within the cage 30, and concentric to the same, moved by flow of disinfecting mixture and, creating a depression above the same, attracts the same disinfecting mixture that, passing through the same enters within conduct (not shown in the figure) within which water flows. Mixer 3 advantageously permits diluting disinfecting mixture at a homogeneous and constant concentration within water to be subjected to treatment.

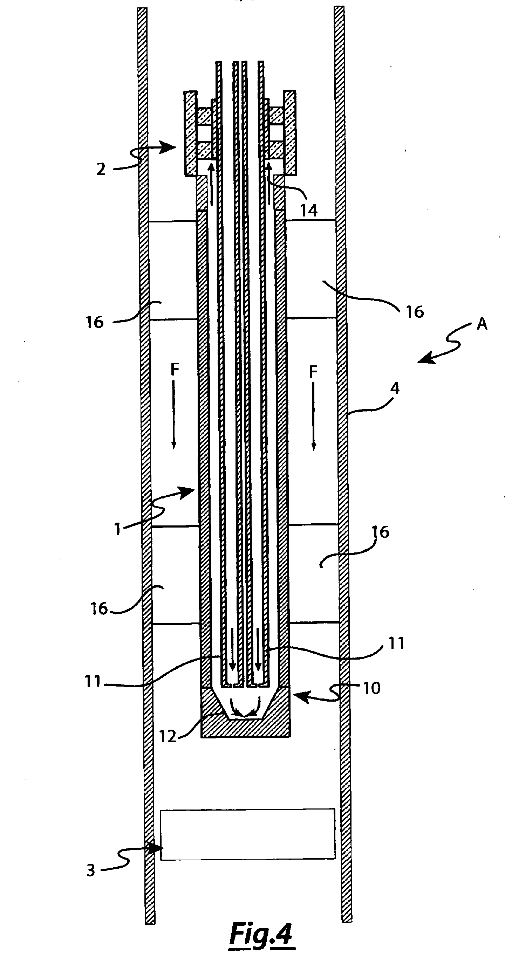

Examining finally figure 4, in a preferred embodiment, which is an alternative of the one represented in figure 1, apparatus A comprises a conduct 4, immerged within water to be subjected to treatment.

Within the reactor 1 there are two vertical conducts 11.

In this preferred embodiment, second helix 23, shown in figure 2, has an opening through which two reagent compound input conducts 11 pass.

Homogenizing/extractor 2 is always provided close to the exit zone 13 of gas from reactor 1. Instead, in this embodiment, fluid mixed 3 is always provided within conduct 4, but it is positioned close to the first zone 10 of said reactor 1, i.e. in the part opposed to said homogenizing/extractor 2 with respect to said reactor 1.

Dilution water flows within conduct 4 according to direction of arrow F toward fluid mixer 3. Blades of second helix 23 are oriented so that, being moved by motion of first helix 20 blades, create a depression able generating a whirling movement of gas extracting the same from reactor 1, thus permitting a homogeneous mixing of dilution water.

Apparatus A according to the present invention has the advantage of increasing efficiency with respect to known apparatuses, and not to involve explosion risks due to blocking of at least one of the fluid extractors, comprised of the second and/or third helix 23, 31: even a contemporaneous blocking of the two helixes does not cause a clogging of the conducts, only temporarily reducing efficiency of apparatus A, obtaining the same efficiency of known apparatuses, but never reducing its safety.

A further advantage of apparatus A is possibility of reducing dosing ratio between reagent compounds, i.e. hydrochloric acid and sodium chlorite, from a molar 371 ratio, necessary to use known apparatuses, approaching to the stoichiometric 5/4 ratio. This result reduces necessity of storing large amounts of hydrochloric acid, and the already mentioned risks.

## Claims

1. Apparatus (A) for disinfecting water, comprising
at least one reactor (1), having at least one outlet opening (14) and supplied by chemical compounds suitable to generate disinfecting and/or oxidizing products,
a conduct (4) supplied with a liquid for diluting said disinfecting and/or oxidizing products and suitable to introduce the obtained mixture within water to be disinfected, said first reactor (1) being contained within said conduct (4), and
a fluid extractor (2), provided on to said reactor (1) outlet opening (14),
**characterized**
**in that** said fluid extractor (2) comprises a first helix (20), suitable to be activated by flow of said dilution fluid entering within said conduct (4), and a second helix (23), which is coaxial to said first helix (20) and is integral with said first helix (20), said second helix (23) being suitable to create a depression on its surface faced outside said reactor (1), said second helix (23) being contained within said first helix (20) and being arranged on the same plane of said first helix (20).

2. Apparatus (A) according to claim 1, **characterized in that** it further comprises a fluid mixer (3), provided in correspondence of one outlet end of said conduct (4).

3. Apparatus (A) according to claim 2, **characterized in that** said fluid mixer (3) comprises a third helix (31).

4. Apparatus (A) according to claim 3, **characterized in that** said third helix (31) is contained within a cage (30).

5. Apparatus (A) according to anyone of the preceding claims, **characterized in that** said reactor (1) has a bottom (12) with rounded comers.

6. Apparatus (A) according to anyone of the preceding claims, **characterized in that** said reactor (1) comprises two supply conducts (11), having their outlet at a closed bottom (12) of said reactor (1).

7. Apparatus (A) according to claim 6, **characterized in that** said conducts (11) are placed vertically and radially arranged with respect to the horizontal section of said reactor (1).

8. Apparatus (A) according to claim 6, **characterized in that** said conducts (11) are placed vertically, substantially in correspondence of the vertical axis of said reactor (1).

9. Apparatus (A) according to anyone of the preceding claims, **characterized in that** said reactor (1) has, on said outlet opening (14), rounded corners (15).

10. Apparatus (A) according to anyone of the preceding claims, **characterized in that** said reactor (1) is comprised of antistatic material.

11. Apparatus (A) according to anyone of the preceding claims, **characterized in that** fixed fins (16) are provided within said conduct (4), in any position and/or with any orientation.

## Patentansprüche

1. Vorrichtung (A) zur Desinfektion von Wasser, umfassend
zumindest einen Reaktor (1), aufweisend zumindest eine Austrittsöffnung (14) und versorgt mit chemischen Verbindungen, die geeignet sind, um Desinfektions- und/oder Oxidationsprodukte zu erzeugen,
eine Leitung (4), versorgt mit einer Flüssigkeit zum Verdünnen der Desinfektions- und/oder Oxidationsprodukte und ausgebildet, um die erhaltende Mischung in zu desinfizierendes Wasser einzuführen, wobei der erste Reaktor (1) sich innerhalb der Leitung (4) befindet, und
eine Fluidextraktionseinrichtung (2), die an der Reaktor (1)-Austrittsöffnung (14) vorgesehen ist,
**dadurch gekennzeichnet,**
**dass** die Fluidextraktionseinrichtung (2) eine erste Wendel (20), die ausgebildet ist, um durch einen innerhalb der Leitung (4) eintretenden Strom des Verdünnungsfluids aktiviert zu werden, und eine zweite Wendel (23), die koaxial zu dieser ersten Wendel (20) ist und als integrales Bauteil von dieser ersten Wendel (20) ausgebildet ist, umfasst, wobei die zweite Wendel (23) ausgebildet ist, um eine Einsenkung auf ihrer Oberfläche, die in Bezug auf den Reaktor (1) nach außen zeigt, zu erzeugen, wobei die zweite Wendel (23) in der ersten Wendel (20) enthalten ist und auf der gleichen Ebene wie die erste Wendel (20) angeordnet ist.

2. Vorrichtung (A) nach Anspruch 1, **dadurch gekennzeichnet, dass** sie ferner einen Fluidmischer (3) enthält, der korrespondierend zu einem Austrittsende der Leitung (4) vorgesehen ist.

3. Vorrichtung (A) nach Anspruch 2, **dadurch gekennzeichnet, dass** dieser Fluidmischer (3) eine dritte Wendel (31) enthält.

4. Vorrichtung (A) nach Anspruch 3, **dadurch gekennzeichnet, dass** die dritte Wendel (31) innerhalb eines Käfigs (30) enthalten ist.

5. Vorrichtung (A) nach einem der vorhergehenden Ansprüche, **dadurch gekennzeichnet, dass** der Reaktor (1) einen Boden (12) mit gerundeten Ecken hat.

6. Vorrichtung (A) nach einem der vorhergehenden Ansprüche, **dadurch gekennzeichnet, dass** der Reaktor (1) zwei Versorgungsleitungen (11) umfasst, die ihren Auslass an einem geschlossenen Boden (12) des Reaktors (1) haben.

7. Vorrichtung (A) nach Anspruch 6, **dadurch gekennzeichnet, dass** die Leitungen (11) vertikal platziert und radial angeordnet in Bezug auf den horizontalen Abschnitt des Reaktors (1) sind.

8. Vorrichtung (A) nach Anspruch 6, **dadurch gekennzeichnet, dass** die Leitungen (11) vertikal platziert sind, im Wesentlichen korrespondierend zu der vertikalen Achse des Reaktors (1).

9. Vorrichtung (A) nach einem der vorangehenden Ansprüche, **dadurch gekennzeichnet, dass** der Reaktor (1) auf dieser Austrittsöffnung (14) gerundete Ecken (15) hat.

10. Vorrichtung (A) nach einem der vorhergehenden Ansprüche, **dadurch gekennzeichnet, dass** der Reaktor (1) aus einem antistatischen Material gebildet ist.

11. Vorrichtung (A) nach einem der vorhergehenden Ansprüche, **dadurch gekennzeichnet, dass** feste Lamellen (16) innerhalb der Leitung (4) an irgendeiner Position und/oder mit irgendeiner Ausrichtung vorgesehen sind.

## Revendications

1. Appareil (A) de désinfection de l'eau, comprenant
au moins un réacteur (1), présentant au moins un orifice de sortie (14) et alimenté en composés chimiques aptes à générer des produits désinfectants et/ou oxydants,
un conduit (4) recevant un liquide pour diluer lesdits produits désinfectants et/ou oxydants et apte à introduire le mélange obtenu dans l'eau à désinfecter, ledit premier réacteur (1) étant contenu dans ledit conduit (4), et
un extracteur de fluide (2), prévu sur ledit orifice de sortie (14) dudit réacteur (1),
**caractérisé en ce que**
ledit extracteur de fluide (2) comprend une première hélice (20), apte à être activée par le débit dudit fluide de dilution entrant dans ledit conduit (4), et une seconde hélice (23), coaxiale à ladite première hélice (20) et solidaire de ladite première hélice (20), ladite seconde hélice (23) étant apte à créer une dépression sur sa surface tournée vers l'extérieur dudit réacteur (1), ladite seconde hélice (23) étant contenue à l'intérieur de ladite première hélice (20) et étant disposée sur le même plan que ladite première hélice (20).

2. Appareil (A) selon la revendication 1, **caractérisé en ce qu'**il comprend, en outre, un mélangeur de fluide (3), disposé en correspondance avec une extrémité de sortie dudit conduit (4).

3. Appareil (A) selon la revendication 2, **caractérisé en ce que** le mélangeur de fluide (3) comprend une troisième hélice (31).

4. Appareil (A) selon la revendication 3, **caractérisé en ce que** ladite troisième hélice (31) est contenue dans une cage (30).

5. Appareil (A) selon l'une quelconque des revendications précédentes, **caractérisé en ce que** ledit réacteur (1) présente un fond (12) pourvu d'angles arrondis.

6. Appareil (A) selon l'une quelconque des revendications précédentes, **caractérisé en ce que** ledit réacteur (1) comprend deux conduits d'alimentation (11) dont les sorties sont situées au niveau d'un fond (12) fermé dudit réacteur (1).

7. Appareil (A) selon la revendication 6, **caractérisé en ce que** lesdits conduits (11) sont placés verticalement et disposés radialement par rapport à la section horizontale dudit réacteur (1).

8. Appareil (A) selon la revendication 6, **caractérisé en ce que** lesdits conduits (11) sont placés verticalement, sensiblement in correspondance avec l'axe vertical dudit réacteur (1).

9. Appareil (A) selon l'une quelconque des revendications précédentes, **caractérisé en ce que** ledit réacteur (1) présente, sur ledit orifice de sortie (14), des angles arrondis (15).

10. Appareil (A) selon l'une quelconque des revendications précédentes, **caractérisé en ce que** ledit réacteur (1) est réalisé dans un matériau antistatique.

11. Appareil (A) selon l'une quelconque des revendications précédentes, **caractérisé en ce que** des ailettes fixes (16) sont prévues à l'intérieur dudit conduit (4), dans une position et/ou selon une orientation quelconques.
